# EUROPEAN PATENT SPECIFICATION

(11) **EP 3 299 885 B1**
(45) Date of publication and mention of the grant of the patent: **11.03.2020**
(21) Application number: 17193104.1
(22) Date of filing: 26.09.2017
(51) Int. Cl.: G03B 21/00, G03B 31/00

(54) **MICRO PROJECTOR**
MIKROPROJEKTOR
MICROPROJECTEUR

(30) Priority: 26.09.2016 CN 201610851556
(43) Date of publication of application: 28.03.2018
(73) Proprietor: Beijing Xiaomi Mobile Software Co., Ltd., Beijing 100085 (CN)
(72) Inventor: XING, Zheng, Beijing, 100085 (CN); LI, Ningning, Beijing, 100085 (CN); ZHANG, Lei, Beijing, 100085 (CN)
(74) Representative: Hughes, Andrea Michelle

(56) References cited:
- EP-A2- 1 526 724
- CN-U- 204 479 901
- FR-A1- 2 273 299
- US-A- 5 630 659
- US-A1- 2014 306 974

## Description

### TECHNICAL FIELD

The present disclosure relates to the field of projection technology, and more particularly to a micro projector.

### BACKGROUND

A projector or image projector is an optical device that projects an image (or moving images) onto a surface, commonly a projection screen. Most projectors create an image by shining a light through a small transparent lens, but some newer types of projectors can project the image directly, by using lasers. The most common type of projector used today is called a video projector. Video projectors are digital replacements for earlier types of projectors such as slide projectors and overhead projectors. A micro projector, also known as a portable projector, pocket projector, or handheld projector, is an electronic device that uses lasers or LEDs to project images. Generally, the micro projector is more compact than the traditional projector, with a higher degree of integration.

In the related art, micro projectors have integrated structures. Micro projectors are integrated with a projection component, an audio play component and a power supply component and other different functional components. Among them, the projection component is used to perform the function of a projector, the audio play component is used to play audio, and the power supply component is used to supply power for the micro projector. Projectors are described in US 5,630,659 and EP 1 526 724.

### SUMMARY

The present disclosure provides a micro projector. The technical solution of the micro projector is provided as follows.

In a first aspect of the present disclosure, a micro projector is provided. The micro projector includes a projection component and at least one audio play component. The at least one audio play component is mounted to the projection component in a detachable way.

In a second aspect of the present disclosure, an apparatus includes a projector housing for at least partially enclosing a projection apparatus configured to project video content. The apparatus further includes a first audio housing for at least partially enclosing an audio play apparatus configured to play audio accompanying the video content. The projector housing is detachably mounted to the first audio housing.

Optionally, the projection component is cylinder-shaped;
the micro projector includes two audio play components, that is, a first audio play component and a second audio play component, each of the two audio play components is cylinder-shaped; and
a first bottom surface of the projection component is connected with a bottom surface of the first the audio play component in a detachable way, a second bottom surface of the projection component is connected with a bottom surface of the second audio play component in the detachable way.

Optionally, each of the audio play components is prismatic-shaped;
among side surfaces of the audio play component, at least one side surface is used to play audio and at least one side surface is not used to play audio.

Optionally, the projection component is prismatic-shaped;
the first bottom surface and the second bottom surface of the projection component are octagonal-shaped;
one of the side surfaces of the projection component is formed with a projection lens.

Optionally, at least one first recess portion is formed on the first bottom surface of the projection component, and at least one first protruding portion that matches with the first recess portion is formed on a bottom surface that is connected with the projection component of the first audio play component;
at least one second recess portion is formed on the second bottom surface of the projection component, and at least one second protruding portion that matches with the second recess portion is formed on a bottom surface that is connected with the projection component of the second audio play component.

Optionally, the projection component and each of the first and second audio play components are provided with a battery unit, respectively.

Optionally, the projection component and each of the first and second audio play components are provided with charging interfaces for charging the respective battery units, respectively.

Optionally, at least one of the projection component and each of the first and second audio play components is provided with a charging interface for charging the respective battery units; and
the battery units are electrically connected with each other by a charging contact.

Optionally, the detachable way is a magnetic attraction way.

Optionally, the projection component and at least one audio play component are provided with communication units.

Optionally, the projection component is provided with a first function button and a second function button; or alternatively, the projection component is provided with the first function button, and each of the first and second audio play components is provided with the second function button; and
wherein the first function button is configured to control the projection component and the second function button is configured to control the audio play components.

The technical solution provided by the present disclosure may include advantageous effects as follows.

By using a separable structure, each audio play component is connected to the projection component in a detachable way; and the audio play components and the projection component can be placed separately after they are separated from each other. The audio play component does not have to be placed near the position of the projection component. The user may place the audio play component according to his/her needs, so as to ensure the sound quality perceived by the user.

It is to be understood that both the foregoing general description and the following detailed description are exemplary only, and should not be construed as limitations to the scope of the disclosure in any way.

### BRIEF DESCRIPTION OF THE DRAWINGS

The drawings are herein incorporated in and constitute a part of the specification, which show embodiments that are consistent with the present disclosure and, together with the description, serve to explain the principles of the present disclosure.
FIG. 1 is a schematic diagram of a micro projector in accordance with an aspect of the disclosure;
FIG. 2 is a structural exploded view of a micro projector in accordance with an aspect of the disclosure;
FIG. 3 is an application scenario diagram of a micro projector in accordance with an aspect of the disclosure;
FIG. 4A is a schematic diagram of a first projection angle in accordance with an aspect of the disclosure;
FIG. 4B is a schematic diagram of a second projection angle in accordance with an aspect of the disclosure;
FIG. 4C is a schematic diagram of a third projection angle in accordance with an aspect of the disclosure; and
FIG. 5 is a schematic representation of the placement of the micro projector in accordance with an aspect of the disclosure.

### DETAILED DESCRIPTION

Hereinafter, an exemplary embodiment will be described in detail, examples of which are shown in the drawings. In the drawings, the same reference numerals will be used to refer to the same or similar elements unless otherwise indicated. The exemplary embodiments described hereinafter are not representative of all possible embodiments consistent with the present disclosure, but rather, they are only provided as examples of those devices and methods consistent with some aspects of the present disclosure as defined in the appended claims.

In micro projectors provided in the related art, audio play components are usually built in the micro projectors. When users are watching multimedia content by using such a micro projector, audio play position is dependent on the position of the micro projector. When the micro projector is placed far from the user, the sound quality perceived by the user may be poor. In view of the above defects, the present disclosure provides a micro projector. The embodiments of the present disclosure provide a technical solution, the core idea of which is to design a micro projector with a separable structure, in which the audio play components are connected with the projection component in a detachable way, so that the audio play components and the projection component can be placed separately after they are separated from each other. Thus, the audio play components do not have to be placed near the projection component, and the user may place the audio play components in appropriate positions according to his/her needs, so as to ensure the sound quality perceived by the user.

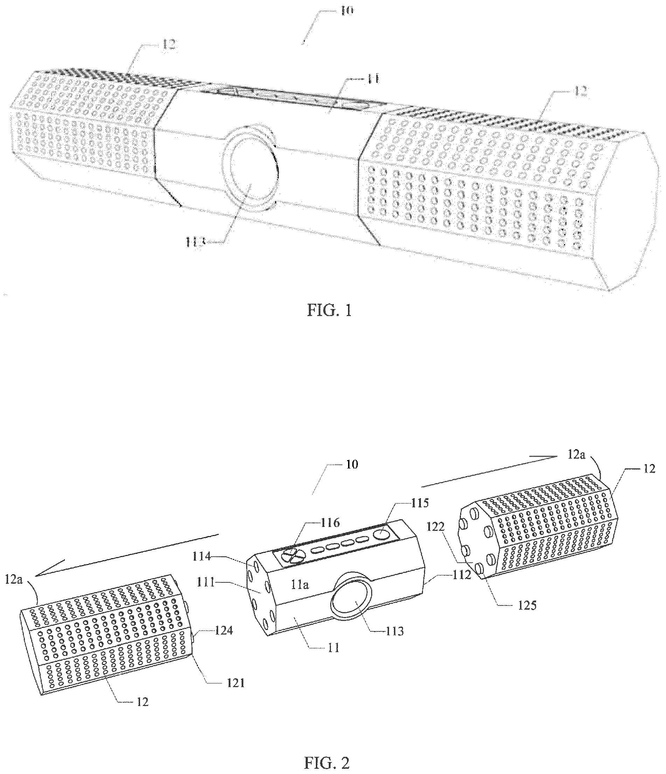

FIG. 1 is a schematic structural diagram of a micro projector 10 in accordance with an exemplary embodiment. The micro projector 10 includes: a projection component 11 and at least one audio play component 12. Each audio play component 12 is mounted to the projection component 11 in a detachable way.

The projection component 11 can be used to implement the projector function, which may include project video/image content to a surface. The projection component 11 may include a projection lens, a battery unit, a charging interface, function buttons, etc. The audio play component 12 is used to play audio. The audio play component may also be called a speaker component. The audio play component 12 may include speakers, mesh covers, function buttons, etc. In the present embodiment, each audio play component 12 is connected with the projection component 11 in a detachable way. Optionally, the detachable way is a magnetic attraction way. For example, magnets are provided on the connection surface of each component, and each component is connected with each other by means of a magnetic attraction. For example, each audio play component 12 is detachably mounted to the projection component 11 by means of a magnetic attraction to facilitate separating and assembling components. Of course, in other possible implementations, the detachable way may be a screw connection method, a buckle connection method, etc., which is not limited in this embodiment.

FIG. 2 shows the structural exploded view of an apparatus 10, which may be the micro projector. The apparatus 10 includes the projection component 11 and the audio play component 12. The projection component 11 includes a projector housing 11a for at least partially enclosing a projection apparatus configured to project video content. The audio play component 12 includes an audio housing 12a for at least partially enclosing an audio play apparatus configured to play audio accompanying the video content. The projection apparatus may include at least one hardware processor to decode video data, power supply to the at least one hardware processor, a lens, at least one communication chip, and other circuitries connecting the different hardware components. The audio play apparatus may include at least one hardware processor to decode audio data, power supply to the at least one hardware processor, a lens, at least one communication chip, and other circuitries connecting the different hardware components. Alternatively, all the hardware processors may be enclosed in the projector housing 11a.

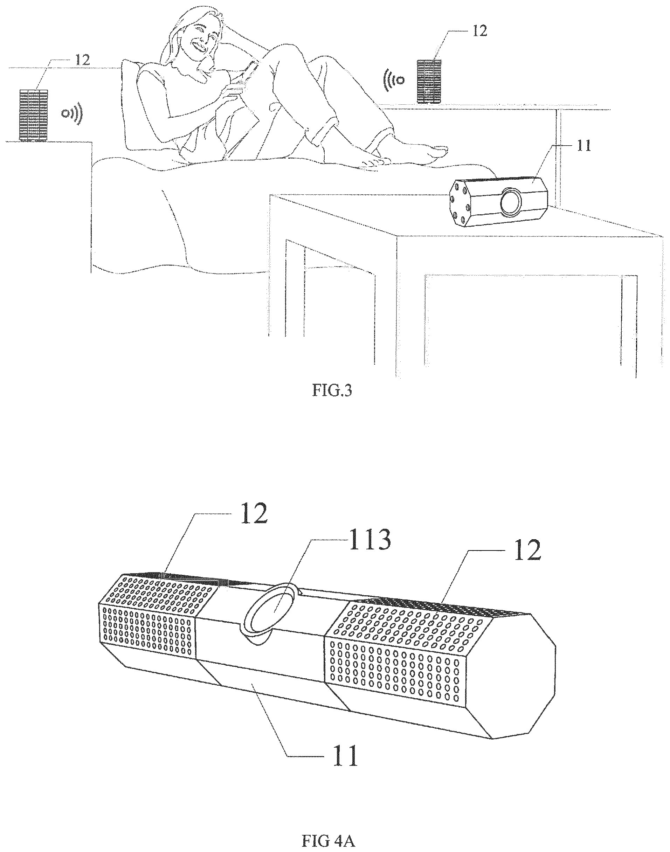

In the case of a magnetic attraction method, as long as the force applied on the audio play component 12 is greater than the magnetic attraction force between the projection component 11 and the audio play component 12, the micro projector 10 will be separated. In the present embodiment, the micro projector 10 is designed with a separable structure, so that the audio play component 12 and the projection component 11 can be placed separately, after they are separated from each other. The audio play component 12 need not be positioned near the projection component 11, and the user can freely select the position of the projection component 11 and the respective position of the audio play components 12 according to his/her needs, so as to obtain better projection effects and better sound quality effects. In addition, when the micro projector 10 includes a plurality of audio play components 12 according to the present embodiment, the plurality of audio play components 12 may be positioned at different places, respectively, so as to achieve a multi-point sound effect. For example, we refer to FIG. 3, which shows an application scenario of the micro projector provided in the present embodiment. When a plurality of audio play components 12 are placed behind the user on both sides, a surround sound effect can be produced.

Optionally, the projection component 11 is column-shaped. For example, the projection component 11 may be prismatic-shaped, or cylinder-shaped. The micro projector 10 includes two audio play components 12, that is, a first audio play component and a second audio play component (as shown in FIG. 1 and FIG. 2, the audio play component on the left side is referred to as the first audio play component and that on the right side as the second audio play component). Each audio play component 12 is cylinder-shaped. For example, the audio play components 12 may be prismatic-shaped, or it may be cylinder-shaped. Under general circumstances, micro projector 10, projection component 11 and each audio play component 12 may be formed in the same cylinder shape, so that each component can be better fitted and assembled. A first side surface 111 of the projection component 11 is connected with a bottom surface 121 of the first audio play component in a detachable way, and a second side surface 112 of the projection component 11 is mounted to a bottom surface 122 of the second audio play component in a detachable way.

In one embodiment of the present disclosure, as shown in FIGs. 1 to 3, each of the audio play components 12 has a prismatic shape. A prismatic shape is a prism with a polygonal bottom, and has at least three sides. For example, the prism may be a triangular prism, a quadrangular prism, pentagonal prism, and etc. Optionally, among the side surfaces of audio play component 12, at least one side surface 42 plays audio and at least one side surface 43 does not play audio. Among the side surfaces of the audio play component 12, a side surface that is provided with audio play modules is referred to a side surface that plays audio, and a side surface that is not provided with audio play modules is referred to a side surface that does not play audio. An audio play module 12 may include a speaker 44 and a mesh cover 45. Each side surface 42 that plays audio is provided with a speaker 44, and a mesh cover 45 is provided on the periphery of the speaker 44. The mesh cover 45 has a mesh structure, in which small holes are uniformly distributed so as to prevent the speaker 44 from sound deterioration due to the effects of impurities, such as dusts, that enter into the speaker 44.

For example, as shown in FIG. 1, the first audio play component and the second audio play component both have octagonal prism shapes, of which five sides are sound emitting sides (with small holes in the side, as shown in the figure) and the other three sides are not sound emitting sides (without any small hole in the side, as shown in the figure). As described above, to avoid a sound emitting surface facing the table and leading to vibrations and other noises generated, affecting the sound quality, when the audio play component 12 is lying on the side, it may be placed so that one side surface which is not a sound emitting side surface faces the table, and those sides that are sound emitting side surfaces face toward side directions and upward direction.

In one exemplary embodiment, as shown in FIGs. 1 to 3, the projection component 11 is formed in a prismatic-shape. For example, the prismatic-shape may be a triangular prism, a quadrangular prism, a pentagonal prism, and etc. In general, the projection component 11 and each audio play component 12 of the micro projector 10 are formed in the same column structure, such as a prismatic structure, the bottom of which is octagonal so that each component can be assembled and fitted conveniently.

Optionally, the first side surface and the second side surface of the projection component 11 are both regular octagonal. A projection lens 113 may be formed in one side of the projection component 11. The projection component 11 may be provided with a plurality of projection angles/directions when it is formed in a regular octagonal prism shape, such as, a horizontal direction, an oblique upward direction, and a vertical upward direction. The user can adjust the orientation of the projection lens 113 to obtain an appropriate projection angle according to the user's requirements.

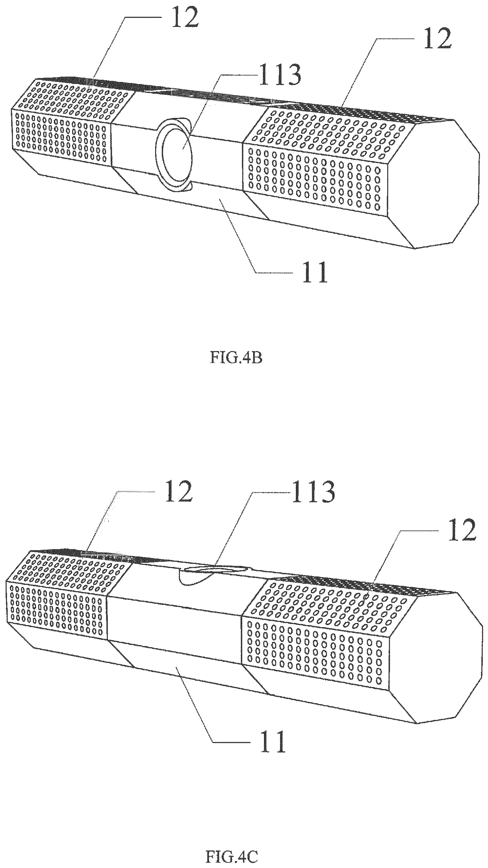

Now, we refer to FIGs. 4A-4C, which show several different orientations of the projection lens 113. In the examples, the projection lens 113 in the FIG. 4A is placed in an obliquely upward direction, and the projection lens 113 shown in the FIG. 4B is placed in a vertical direction, and the projection lens 113 in the FIG. 4C faces a horizontal direction.

Optionally, as shown in FIG. 2, at least one first recess portion 114 is disposed on the first side surface 111 of the projection component 11. At least one first protruding portion 124 that matches with the at least one first recess portion 114 is disposed on the bottom surface 121 that is connected with the projection component 11 of the first audio play component. At least one second recess portions (not shown) is disposed on the side surface 112 of the projection component 11. And at least one second protruding portion 125 that matches with the at least one second recess portion is disposed on the bottom surface 122 that is connected with the projection component 11 of the second audio play component. The first protruding portion 124 and the second protruding portion 125 may be a cylindrical structure with a circular bottom surface or a prismatic structure with a polygonal bottom surface. The material of the first protruding portion 124 and the second protruding portion 125 may be selected from rubber, metal, etc. In this way, on one hand, it is possible to prevent the projection component 11 and the audio play component 12 from rotating freely after they are connected together. On the other hand, when the audio play component 12 is placed vertically, the audio play component 12 can be supported stably.

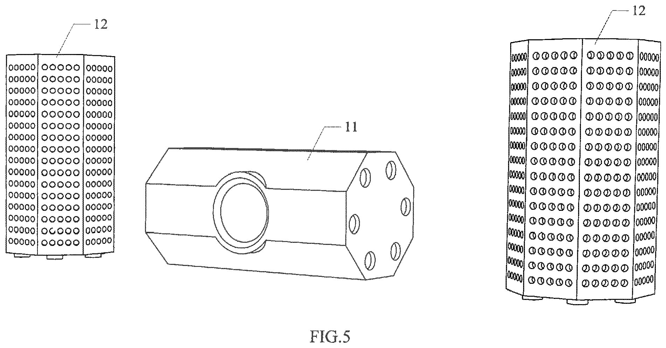

FIG. 5 shows a placement diagram of the micro projector 10. When the micro projector 10 is in a separated state, the projection component 11 can be placed vertically or placed horizontally (as an example, the projection component 11 is shown horizontally in the FIG. 5). Any one of the exterior surfaces that is not provided with the projection lens 113 or function key can be used as a support surface facing the table. Two audio play components 12 can be placed vertically or horizontally (as an example, in FIG. 5, the audio play components 12 are shown vertically). Any of its bottom surfaces or side surfaces can be used as a support surface facing the table.

Optionally, projection component 11 and each audio play component 12 are provided with the battery units, respectively. As each component of the micro projector 10 can be powered with a corresponding battery unit independently, the components can work independently after they are separated from each other. This may help to increase the work duration of the micro projector 10.

In one example, the projection component 11 and each audio play component 12 are provided with a charging interface for charging the respective battery unit so that each component can be independently charged.

In another example, among the projection component 11 and audio play components 12, at least one of them is provided with a charging interface for charging the respective battery unit. Each battery unit is electrically connected by a charging contact. The charging contact is also referred to as a frequency point, being used to electrical connect the individual battery units to transmit power. For example, as shown in the micro projector 10 of FIG. 2, at least one first charging contact (not shown) is provided on the first side surface 111 of the projection component 11, and a second charging contact (not shown) that mates with each of the at least one first charging contact is provided on the bottom surface that is mounted to the projection component 11. The second side surface 112 of the projection component 11 is provided with at least one third charging contact (not shown), and the bottom surface that is mounted to the projection component 11 of the second audio play component is provided with a fourth charging contact (not shown) which mates with each of the at least one third charging contact. Thus, only one charge interface needs to be provided on one of the components of the micro projector 10.

For example, in one or more embodiments, only a single charging interface is provided on the projection component 11. With such a structure, when compared with the first example as described above, the number of charging interfaces can be reduced, and the cost of micro projector 10 can be saved, too. At the time of charging, by assembling all the components together and connecting the projection component 11 via the charging interface to the power supply, the respective battery unit of every audio play component 12 and the battery unit of the projection component 11 may be charged.

Optionally, communication units are provided within the projection component 11 and at least one of the audio play components 12. The communication units are used to perform data communication between the components, and realize the cooperation between the projection component 11 and each audio play component 12. The communication unit may include a Bluetooth module, a Wi-Fi (Wireless Fidelity) module, or other hardware supporting wireless communication technology. When the individual components of the micro projector 10 work in a separated state, communication unit can help to ensure that the individual components cooperate with each other synchronously, so as to avoid unmatched screen and audio.

In some embodiments, projection component 11 is provided with first function button (or buttons) and second function button (or buttons) (as shown in FIG. 2, first function buttons 115 and second function buttons 116). Or alternatively, the first function button (or buttons) is provided on the projection component 11, and the second function button (or buttons) is provided on at least one audio play component 12. The first function button is used to control the projection component 11, for example, the first function button may include a power switch button, a brightness adjustment button, a color adjustment button, a projection mode adjustment button, and etc. The second function button is used to control the audio play component 12, for example, the second function button may include a volume adjustment button, a sound control button, a power switch button and etc.

In summary, with the separable structure of the micro projector provided by the present disclosure, each audio play component is mounted to the projection component in a detachable way, so that the audio play components and the projection component can be placed separately, the audio play components do not have to be placed near the position of the projection component, and the user can place the audio play components in any appropriate location as needed to ensure the sound quality that is perceived by the user.

In addition, when the micro projector includes a plurality of audio play components, the plurality of audio play components can be placed in different locations, so as to achieve multi-point sound effects, and to create a surround sound effect.

In addition, by connecting each audio play component to the projection component by means of magnetic attraction, it is very easy to separate and assemble the components of the micro projector.

In addition, by providing battery units in the projection component and each audio play component, each individual component can be powered independently, so that the individual components can work independently after they are separated from each other. Furthermore, this also helps to increase the duration of working of the micro projector.

In addition, by providing communication units in the projection component and at least one audio play component, it can be ensured that the individual components cooperate with each other synchronously, so as to avoid unmatched screen and audio.

Optionally, the projection component is cylinder-shaped. The micro projector includes two audio play components, that is, a first audio play component and a second audio play component, each of the two audio play components is cylinder-shaped. A first side surface of the projection component is connected with a bottom surface of the first the audio play component in a detachable way, a second side surface of the projection component is connected with a bottom surface of the second audio play component in the detachable way.

Optionally, each of the audio play components is prismatic-shaped. Among side surfaces of the audio play component, at least one side surface is used to play audio and at least one side surface is not used to play audio.

Optionally, the projection component is prismatic-shaped. The first side surface and the second side surface of the projection component are octagonal-shaped. One of the side surfaces of the projection component is configured to accommodate a projection lens passing through therein. For example, the projection component includes a front exterior surface configured to accommodate a projection lens passing through therein.

Optionally, at least one first recess portion is disposed on the first side surface of the projection component, and at least one first protruding portion that matches with the first recess portion is disposed on a bottom surface that is connected with the projection component of the first audio play component. At least one second recess portion is disposed on the second side surface of the projection component, and at least one second protruding portion that matches with the second recess portion is disposed on a bottom surface that is connected with the projection component of the second audio play component.

Optionally, the projection component and each of the first and second audio play components are provided with a battery unit, respectively.

Optionally, the projection component and each of the first and second audio play components are provided with charging interfaces for charging the respective battery units, respectively.

Optionally, at least one of the projection component and each of the first and second audio play components is provided with a charging interface for charging the respective battery units. The battery units are electrically connected with each other by a charging contact.

Optionally, the detachable way is a magnetic attraction way.

Optionally, the projection component and at least one audio play component are provided with communication units.

Optionally, the projection component is provided with a first function button and a second function button. Alternatively, the projection component is provided with the first function button, and each of the first and second audio play components is provided with the second function button. The first function button is configured to control the projection component and the second function button is configured to control the audio play components.

The technical solution provided by the present disclosure may include advantageous effects as follows.

By using a separable structure, each audio play component is mounted to the projection component in a detachable way; and the audio play components and the projection component can be placed separately after they are separated from each other. The audio play component does not have to be placed near the position of the projection component. The user may place the audio play component according to his/her needs, so as to ensure the sound quality perceived by the user.

It is to be understood that the expression "a plurality of' used herein refers to two or more. The term "and/or" used herein describes the relationship of the associated objects, indicating that there may be three relationships, for example, A and/or B indicates: there is only A, there are A and B, and there is only B. The character "/" generally indicates that the context object is an "OR" relationship.

Other embodiments of the present disclosure will be readily apparent to those skilled in the art upon consideration of the specification and practice of the invention disclosed herein. The present application is intended to cover any variations, uses or adaptations of the present disclosure that follow the scope of the invention defined by the claims. The description and the embodiments are provided by way of illustration only, and the protection scope of the present disclosure should be defined by the claims.

It is to be understood that the present disclosure is not limited to the precise constructions that have been described above and shown in the drawings, and that various modifications and alterations may be made without departing from the scope thereof. The scope of the present disclosure is limited only by the appended claims.

## Claims

1. A micro projector (10), including:
a projection component (11) configured to project video content; and
at least one audio play component (12) configured to play audio accompanying the video content,
wherein the at least one audio play component (12) is detachably mounted to the projection component (11) via a magnetic attraction mechanism.

2. The micro projector (10) according to claim 1,
wherein the projection component (11) is cylinder-shaped;
wherein the micro projector (10) includes a first audio play component (12) and a second audio play component (12), each of the first and second audio play components (12) is cylinder-shaped; and
wherein a first side surface of the projection component (11) is connected with a bottom surface of the first audio play component (12) in a detachable way, and a second side surface of the projection component (11) is connected with a bottom surface of the second audio play component (12) in the detachable way.

3. The micro projector (10) according to claim 2,
wherein each of the first and second audio play components (12) is prismatic-shaped; and
wherein at least one side surface (42) is used to play audio and at least one side surface (43) is not used to play audio.

4. The micro projector (10) according to claim 2 or 3,
wherein the projection component (11) is prismatic-shaped;
wherein the first side surface and the second side surface of the projection component are (11) octagonal-shaped; and
wherein the projection component (11) comprise a front exterior surface configured to accommodate a projection lens (113) passing through therein.

5. The micro projector (10) according to any one of claims 2-4,
wherein at least one first recess portion (114) is disposed on the first side surface (111) of the projection component (11), and at least one first protruding portion (124) that matches with the at least one first recess portion (114) is disposed on a bottom surface (112) that is connected with the projection component (11) of the first audio play component (12); and
wherein at least one second recess portion is disposed on the second side surface (112) of the projection component (11), and at least one second protruding portion that matches with the at least one second recess portion is disposed on a bottom surface that is connected with the projection component (11) of the second audio play component (12).

6. The micro projector (10) according to any one of claims 1 to 5, wherein the projection component (11) and each of the at least one audio play component (12) are respectively provided with a battery unit.

7. The micro projector (10) according to claim 6, wherein the projection component (11) and each of the at least one audio play component (12) are respectively provided with charging interfaces for charging the respective battery units.

8. The micro projector (10) according to claim 6,
wherein at least one of the projection component (11) and the at least one audio play component (12) is provided with a charging interface for charging the battery units; and
wherein the battery units are electrically connected with each other by a charging contact.

9. The micro projector (10) according to any one of claims 2 to 5, wherein the first side surface of the projection component is connected with the bottom surface of the first audio play component in the detachable way by magnetic attraction, and the second side surface of the projection component is connected with the bottom surface of the second audio play component in the detachable way by magnetic attraction.

10. The micro projector (10) according to any one of claims 1 to 9, wherein the projection component (11) and at least one audio play component (12) comprise communication units.

11. The micro projector (10) according to any one of claims 1 to 10, wherein the projection component (11) is provided with a first function button (115) and a second function button (116); or the projection component (11) is provided with a first function button(115), and each of the at least one audio play component (12) is provided with a second function button (116); and wherein the first function button is configured to control the projection component (11) and the second function button is configured to control the audio play component (12).

12. The micro projector (10) according to any preceding claim, further comprising:
a projector housing for at least partially enclosing the projection component configured to project video content; and
a first audio housing for at least partially enclosing the at least one audio play component configured to play audio accompanying the video content,
wherein a first side surface of the projector housing is detachably connected with a bottom surface of the first audio housing to form a projection system having a similar shape to the projector housing and the first audio housing.

13. The micro projector of claim 12, further comprising a second audio housing for at least partially enclosing a second audio play apparatus configured to play audio accompanying the video content.

14. The micro projector of claim 13, wherein the first audio housing and the second audio housing are cylinder-shaped.

15. The micro projector of claim 14, wherein a first side surface of the projector housing is detachably connected with a bottom surface of the first audio housing, and a second side surface of the projector housing is detachably connected with a bottom surface of the second audio housing.

## Patentansprüche

1. Mikroprojektor (10), einschließend:
- eine Projektionskomponente (11), die dazu konfiguriert ist, Videoinhalt zu projizieren; und
- mindestens eine Audioplay-Komponente (12), die dazu konfiguriert ist, den Videoinhalt begleitenden Audioinhalt abzuspielen,
- wobei die mindestens eine Audiowiedergabe-Komponente (12) über einen magnetischen Anziehungsmechanismus abnehmbar an der Projektionskomponente (11) befestigt ist.

2. Mikroprojektor (10) nach Anspruch 1,
- wobei die Projektionskomponente (11) zylinderförmig ist;
- wobei der Mikroprojektor (10) eine erste Audiowiedergabe-Komponente (12) und eine zweite Audiowiedergabe-Komponente (12) einschließt, wobei jede von der ersten und der zweiten Audiowiedergabe-Komponente (12) zylinderförmig ist; und
- wobei eine erste Seitenfläche der Projektionskomponente (11) in einer abnehmbaren Weise mit einer Unterseite der ersten Audiowiedergabe-Komponente (12) verbunden ist und eine zweite Seitenfläche der Projektionskomponente (11) in der abnehmbaren Weise mit einer Unterseite der zweiten Audiowiedergabe-Komponente (12) verbunden ist.

3. Mikroprojektor (10) nach Anspruch 2,
- wobei jede von der ersten und der zweiten Audiowiedergabe-Komponente (12) prismenförmig ist; und
- wobei mindestens eine Seitenfläche (42) dazu verwendet wird, Audioinhalt abzuspielen und zumindest eine Seitenfläche (43) nicht dazu verwendet wird, Audioinhalt abzuspielen.

4. Mikroprojektor (10) nach Anspruch 2 oder 3,
- wobei die Projektionskomponente (11) prismenförmig ist;
- wobei die erste Seitenfläche und die zweite Seitenfläche der Projektionskomponente (11) achteckförmig sind; und
- wobei die Projektionskomponente (11) eine vordere Außenfläche umfasst, die dazu konfiguriert ist, eine hindurchtretende Projektionslinse (113) darin aufzunehmen.

5. Mikroprojektor (10) nach einem der Ansprüche 2 bis 4,
- wobei mindestens ein erster Aussparungsabschnitt (114) auf der ersten Seitenfläche (111) der Projektionskomponente (11) angeordnet ist und mindestens ein erster vorspringender Abschnitt (124), der mit dem mindestens einen ersten Aussparungsabschnitt (114) zusammenpasst, auf einer Unterseite (112), die mit der Projektionskomponente (11) der ersten Audiowiedergabe-Komponente (12) verbunden ist, angeordnet ist; und
- wobei mindestens ein zweiter Aussparungsabschnitt auf der zweiten Seitenfläche (112) der Projektionskomponente (11) angeordnet ist und mindestens ein zweiter vorspringender Abschnitt, der mit dem mindestens einen zweiten Aussparungsabschnitt zusammenpasst, auf einer Unterseite, die mit der Projektionskomponente (11) der zweiten Audiowiedergabe-Komponente (12) verbunden ist, angeordnet ist.

6. Mikroprojektor (10) nach einem der Ansprüche 1 bis 5, wobei die Projektionskomponente (11) und jede von der mindestens einen Audiowiedergabe-Komponente (12) jeweils mit einer Batterieeinheit versehen sind.

7. Mikroprojektor (10) nach Anspruch 6, wobei die Projektionskomponente (11) und jede von der mindestens einen Audiowiedergabe-Komponente (12) jeweils mit Ladeschnittstellen zum Aufladen der jeweiligen Batterieeinheiten versehen sind.

8. Mikroprojektor (10) nach Anspruch 6,
- wobei mindestens eine von der Projektionskomponente (11) und der mindestens einen Audiowiedergabe-Komponente (12) mit einer Ladeschnittstelle zum Aufladen der Batterieeinheiten versehen ist; und
- wobei die Batterieeinheiten durch einen Ladekontakt elektrisch miteinander verbunden sind.

9. Mikroprojektor (10) nach einem der Ansprüche 2 bis 5, wobei die erste Seitenfläche der Projektionskomponente durch magnetische Anziehung in der abnehmbaren Weise mit der Unterseite der ersten Audiowiedergabe-Komponente verbunden ist und die zweite Seitenfläche der Projektionskomponente durch magnetische Anziehung in der abnehmbaren Weise mit der Unterseite der zweiten Audiowiedergabe-Komponente verbunden ist.

10. Mikroprojektor (10) nach einem der Ansprüche 1 bis 9, wobei die Projektionskomponente (11) und mindestens eine Audiowiedergabe-Komponente (12) Kommunikationseinheiten umfassen.

11. Mikroprojektor (10) nach einem der Ansprüche 1 bis 10, wobei die Projektionskomponente (11) mit einem ersten Funktionsknopf (115) und einem zweiten Funktionsknopf (116) versehen ist; oder die Projektionskomponente (11) mit einem ersten Funktionsknopf (115) versehen ist und jede von der mindestens einen Audiowiedergabe-Komponente (12) mit einem zweiten Funktionsknopf (116) versehen ist; und wobei der erste Funktionsknopf dazu konfiguriert ist, die Projektionskomponente (11) zu steuern, und der zweite Funktionsknopf dazu konfiguriert ist, die Audiowiedergabe-Komponente (12) zu steuern.

12. Mikroprojektor (10) nach einem vorstehenden Anspruch, weiter umfassend:
- ein Projektorgehäuse zum zumindest teilweisen Umschließen der Projektionskomponente, die dazu konfiguriert ist, Videoinhalt zu projizieren; und
- ein erstes Audiogehäuse zum zumindest teilweisen Umschließen der mindestens einen Audiowiedergabe-Komponente, die dazu konfiguriert ist, den Videoinhalt begleitenden Audioinhalt abzuspielen,
- wobei eine erste Seitenfläche des Projektorgehäuses abnehmbar mit einer Unterseite des ersten Audiogehäuses verbunden ist, um ein Projektionssystem zu bilden, das eine zu dem Projektorgehäuse und dem ersten Audiogehäuse ähnliche Form aufweist.

13. Mikroprojektor nach Anspruch 12, ferner umfassend ein zweites Audiogehäuse zum zumindest teilweisen Umschließen eines zweiten Audiowiedergabe-Geräts, das dazu konfiguriert ist, den Videoinhalt begleitenden Audioinhalt abzuspielen.

14. Mikroprojektor nach Anspruch 13, wobei das erste Audiogehäuse und das zweite Audiogehäuse zylinderförmig sind.

15. Mikroprojektor nach Anspruch 14, wobei eine erste Seitenfläche des Projektorgehäuses abnehmbar mit einer Unterseite des ersten Audiogehäuses verbunden ist und eine zweite Seitenfläche des Projektorgehäuses abnehmbar mit einer Unterseite des zweiten Audiogehäuses verbunden ist.

## Revendications

1. Microprojecteur (10), incluant :
un composant de projection (11) configuré pour projeter un contenu vidéo ; et
au moins un composant de lecture audio (12) configuré pour lire un fichier audio accompagnant le contenu vidéo,
dans lequel le au moins un composant de lecture audio (12) est monté de manière détachable sur le composant de projection (11) via un mécanisme d'attraction magnétique.

2. Microprojecteur (10) selon la revendication 1,
dans lequel le composant de projection (11) est en forme de cylindre ;
dans lequel le microprojecteur (10) inclut un premier composant de lecture audio (12) et un second composant de lecture audio (12), chacun des premier et second composants de lecture audio (12) est cylindrique ; et
dans lequel une première surface latérale du composant de projection (11) est raccordée de manière détachable à une surface inférieure du premier composant de lecture audio (12), et une seconde surface latérale du composant de projection (11) est raccordée de manière détachable à une surface inférieure du second composant de lecture audio (12).

3. Microprojecteur (10) selon la revendication 2,
dans lequel chacun des premier et second composants de lecture audio (12) est en forme de prisme ; et
dans lequel au moins une surface latérale (42) est utilisée pour lire un fichier audio et au moins une surface latérale (43) n'est pas utilisée pour lire un fichier audio.

4. Microprojecteur (10) selon la revendication 2 ou 3,
dans lequel le composant de projection (11) est en forme de prisme ;
dans lequel la première surface latérale et la seconde surface latérale du composant de projection (11) sont octogonales ; et
dans lequel le composant de projection (11) comprend une surface extérieure avant configurée pour loger une lentille de projection (113) passant au travers de celui-ci.

5. Microprojecteur (10) selon l'une quelconque des revendications 2 à 4,
dans lequel au moins une première portion d'évidement (114) est disposée sur la première surface latérale (111) du composant de projection (11), et au moins une première portion en saillie (124) qui correspond à la au moins une première portion d'évidement (114) est disposée sur une surface inférieure (112) qui est raccordée au composant de projection (11) du premier composant de lecture audio (12) ; et
dans lequel au moins une seconde portion d'évidement est disposée sur la seconde surface latérale (112) du composant de projection (11), et au moins une seconde portion en saillie qui correspond à la au moins une seconde portion d'évidement est disposée sur une surface inférieure qui est raccordée au composant de projection (11) du second composant de lecture audio (12).

6. Microprojecteur (10) selon l'une quelconque des revendications 1 à 5, dans lequel le composant de projection (11) et chaque au moins un composant de lecture audio (12) sont respectivement dotés d'une unité de batterie.

7. Microprojecteur (10) selon la revendication 6, dans lequel le composant de projection (11) et chaque au moins un composant de lecture audio (12) sont respectivement dotés d'interfaces de chargement pour un chargement des unités de batterie respectives.

8. Microprojecteur (10) selon la revendication 6,
dans lequel au moins un du composant de projection (11) et du au moins un composant de lecture audio (12) est doté d'une interface de chargement pour un chargement des unités de batterie ; et
dans lequel les unités de batterie sont raccordées électriquement les unes aux autres par un contact de chargement.

9. Microprojecteur (10) selon l'une quelconque des revendications 2 à 5, dans lequel la première surface latérale du composant de projection est raccordée à la surface inférieure du premier composant de lecture audio de manière détachable par attraction magnétique, et la seconde surface latérale du composant de projection est raccordée à la surface inférieure du second composant de lecture audio de manière détachable par attraction magnétique.

10. Microprojecteur (10) selon l'une quelconque des revendications 1 à 9, dans lequel le composant de projection (11) et au moins un composant de lecture audio (12) comprennent des unités de communication.

11. Microprojecteur (10) selon l'une quelconque des revendications 1 à 10, dans lequel le composant de projection (11) est doté d'un premier bouton fonctionnel (115) et d'un second bouton fonctionnel (116) ; ou le composant de projection (11) est doté d'un premier bouton fonctionnel (115), et chaque au moins un composant de lecture audio (12) est doté d'un second bouton fonctionnel (116) ; et dans lequel le premier bouton fonctionnel est configuré pour commander le composant de projection (11) et le second bouton fonctionnel est configuré pour commander le composant de lecture audio (12).

12. Microprojecteur (10) selon l'une quelconque des revendications précédentes, comprenant en outre :
un logement de projecteur pour enfermer au moins partiellement le composant de projection configuré pour projeter le contenu vidéo ; et
un premier logement audio pour enfermer au moins partiellement le au moins un composant de lecture audio configuré pour lire un fichier audio accompagnant le contenu vidéo,
dans lequel une première surface latérale du logement de projecteur est raccordée de manière détachable à une surface inférieure du premier logement audio pour former un système de projection présentant une forme similaire au logement de projecteur et au premier logement audio.

13. Microprojecteur selon la revendication 12, comprenant en outre un second logement audio pour enfermer au moins partiellement un second appareil de lecture audio configuré pour lire un fichier audio accompagnant le contenu vidéo.

14. Microprojecteur selon la revendication 13, dans lequel le premier logement audio et le second logement audio sont cylindriques.

15. Microprojecteur selon la revendication 14, dans lequel une première surface latérale du logement de projecteur est raccordée de manière détachable à une surface inférieure du premier logement audio, et une seconde surface latérale du logement de projecteur est raccordée de manière détachable à une surface inférieure du second logement audio.
